Europäisches Patentamt

European Patent Office

Office européen des brevets

(11) Veröffentlichungsnummer: **0 286 096**
**A1**

## EUROPÄISCHE PATENTANMELDUNG

(21) Anmeldenummer: 88105560.2

(22) Anmeldetag: 07.04.88

(51) Int. Cl.4: **A01B 13/08 , A01B 13/12 ,
A01B 49/02 , A01B 15/14 ,
A01B 35/18**

(30) Priorität: 08.04.87 DE 3711921

(43) Veröffentlichungstag der Anmeldung:
**12.10.88 Patentblatt 88/41**

(84) Benannte Vertragsstaaten:
**DE FR IT NL**

(71) Anmelder: **Kemmner, Hartmut
Untere Gasse 10
D-7411 Unterensingen(DE)**

(72) Erfinder: **Kemmner, Hartmut
Untere Gasse 10
D-7411 Unterensingen(DE)**

(74) Vertreter: **Lamprecht, Helmut, Dipl.-Ing.
Corneliusstrasse 42
D-8000 München 5(DE)**

(54) Gerät zur Bearbeitung landwirtschaftlich genutzter Böden.

(57) Ein Gerät zur Bearbeitung landwirtschaflich genutzter Böden besitzt einen Tragrahmen (11), an dem mindestens ein Lockerungsschar (15) mit einer zum Ablösen und zeitweiligen Anheben eines Bodenstreifens entgegen der Arbeitsrichtung (18) ansteigenden Scharoberfläche. Im Bereich des Lockerungsschars (15) ist mit einstellbarem, vertikalem Abstand von der Scharoberfläche eine Vorrichtung (53, 171) angeordnet, die geeignet ist, auf die obere Schicht des vom Lockerungsschar (15) angehobenen Materials mindestens eine etwa horizontal und quer zur Arbeitsrichtung (18) gerichtete Bewegungskomponente zu übertragen.

Fig. 3

## Gerät zur Bearbeitung landwirtschaftlich genutzter Böden

Die Erfindung betrifft ein Gerät zur Bearbeitung landwirtschaftlich genutzter Böden mit mindestens einem an einem Tragrahmen angeordneten Lockerungsschar mit einer zum Ablösen und zeitweiligen Anheben eines Bodenstreifens entgegen der Arbeitsrichtung ansteigenden Scharoberfläche.

Geräte dieser Art sind als Grubber bekannt. Grubber können mit einem im Abstand dahinter angeordneten, nachlaufenden, unabhängig von den Grubberscharen auf das Erdreich einwirkenden Rotor, der um eine horizontale oder eine vertikale Achse rotieren kann, kombiniert sein.

Ist der Boden mit größeren organischen Massen in Form von Ernterückständen bedeckt, besteht bei derartigen Grubbern Verstopfungsgefahr zwischen den Lockerungsscharen und gegebenenfalls auch im Bereich des nachlaufenden Rotors. Außerdem ist ein erheblicher Energieaufwand erforderlich, weil die von den Lockerungsscharen des Grubbers gelockerte und unter Energieaufwand zunächst angehobene Erde hinter den Scharen zunächst wieder herunterfällt und dann im Boden vom nachlaufenden Rotor mit erheblichem Energieaufwand bearbeitet werden muß. Durch die Arbeitsweise des mit horizontaler Achse arbeitenden Rotors ergibt sich als weiterer Nachteil eine knetende, eine unerwünschte Bodenverdichtung verursachende Einwirkung auf den bearbeiteten Boden, weil auf den Boden etwa vertikal gerichtete Schläge ausgeübt werden und sich eine Bearbeitungssohle bildet.

Es gibt ferner kombinierte Geräte, bei denen einzelne Lockerungsschare in Fahrtrichtung versetzt angeordnet sind und dazwischen ein um eine horizontale Achse arbeitender Rotor angeordnet ist, wobei die Haltearme der Lockerungsschare zwischen den Werkzeugen des Rotors sitzen. Auch diese Geräte verursachen aus den bereits genannten Gründen eine unerwünschte Bodenverdichtung. Ein weiterer erheblicher Nachteil liegt im Regelfall darin, daß im Bereich der Haltearme der Lockerungsschare, wo die Rotorwerkzeuge nicht wirksam werden können, im Boden unbearbeitete Streifen verbleiben. Hier besteht die Gefahr, daß der Boden austrocknet. Es ist außerdem auch mit einem solchen kombinierten Gerät nicht möglich, etwaige organische Rückstände tiefgründig mit dem Boden zu mischen. Der Rotor ist nicht in der Lage, tief genug zu arbeiten.

Bekannt ist schließlich auch ein sog. Kreiselpflug, bei dem das Streichblech teilweise durch einen Rotor ersetzt ist. Nachteilig ist auch beim Kreiselpflug die Verstopfungsgefahr durch organische Massen und die nur bedingt bestehende Möglichkeit, diese Rückstände zu mischen. Außerdem ist durch die besondere Bauweise des Kreiselpflugs nur eine sog. beetförmige Bearbeitung der Bodenfläche mit den dadurch bedingten Nachteilen möglich.

Der Erfindung liegt die Aufgabe zugrunde, ein Gerät der eingangs genannten Art so auszugestalten, daß selbst bei großen organischen Rückständen, z.B. Strohmassen, eine verstopfungsfreie Bodenbearbeitung bei optimaler Arbeitsqualität und in einem Arbeitsgang für verschiedene Bedarfsfälle durchgeführt werden kann. Dabei soll insbesondere auch eine Bodenbearbeitung ermöglicht werden, die einen bemerkenswerten Nachteil der Bodenbearbeitung mit konventionellen Pflügen vermeidet. Konventionelle Pflüge wenden einen Furchenbalken entsprechend dem gewählten Tiefgang. Dadurch werden die wertvollen Bodenbakterien, die sich nahe der Bodenoberfläche befinden und dort auch für die rasche Verrottung der organischen Rückstände erwünscht sind, in eine verhältnismäßig tiefe Bodenschicht verdrängt, während eine bakterienarme Bodenschicht an die Oberfläche verlagert wird.

Die Lösung der gestellten Aufgabe besteht darin, daß im Bereich der Lockerungsschar mit einstellbarem, vertikalem Abstand von der Scharoberfläche eine Vorrichtung zur Übertragung mindestens einer etwa horizontal und quer zur Arbeitsrichtung gerichteten Bewegungskomponente auf die obere Schicht des vom Lockerungsschar angehobenen Materials angeordnet ist, wobei vorzugsweise die Vorrichtung zur übertragung einer Bewegungskomponente zwischen einer rechtsfördernden und einer linksfördernden Einstellung umstellbar ist, damit das Gerät in beiden Fahrtrichtungen eingesetzt werden kann.

Durch diese Gestaltung wird vom Lockerungsschar der Boden in der eingestellten Tiefe aufgelockert und zugleich wird durch die Vorrichtung zur übertragung einer Bewegungskomponente auf die obere Schicht des nach angehobenen Bodenstreifens eingewirkt, wobei organische Rückstände in den Bereich der benachbarten, bereits bearbeiteten Furche befördert und mit bakterienreicher Erde überdeckt werden. Es ist dabei verstopfungsfrei sowohl diese sog. Stoppelbearbeitung, als auch ohne große Umstellung eine sog. Herbstbodenbearbeitung möglich.

Bei der Stoppelbearbeitung wird angestrebt, die organischen Rückstände auf dem Feld flach einzumischen, so daß eine optimale Verrottung möglich ist. Das Keimen der ausgefallenen Unkraut-und Getreidesamen sollte dabei begünstigt werden. Gleichzeitig wird angestrebt, die im Laufe des Jahres z.B. durch häufiges Befahren im Rahmen von Kulturmaßnahmen entstandenen Verdichtungen möglichst in einem Arbeitsgang wieder aufzulockern.

Bei der Herbstbodenbearbeitung sollen die organischen Rückstände auf dem Feld so eingemischt werden, daß eine Verrottung gewährleistet ist und in einem Arbeitsgang eine nachfolgende Saat ermöglicht wird. Auch hier sollen Bodenverdichtungen soweit aufgelockert werden, daß die neue Saat nicht unter stauender Näße leidet. Auch diese Herbstbodenbearbeitung ist mit dem erfindungsgemäßen Gerät möglich, weil einerseits der Tiefgang der Lockerungsschare erhöht und außerdem der Abstand zwschen der Lockerungsschar und der Vorrichtung zur Übertragung einer Bewegungskomponente verringert werden kann, so daß der Boden tief aufgelockert wird, die organischen Rückstände tief in den Boden eingemischt werden und dadurch eine sofortige Aussaat ermöglicht wird.

Diese Wirkungsweise wird besonders gefördert, wenn nach einer bevorzugten Ausführungsform die Vorrichtung zur Übertragung mindestens einer etwa horizontal und quer zur Arbeitsrichtung gerichteten Bewegungskomponente aus einem um eine etwa vertikale Drehachse drehbaren Rotor besteht, durch den eine besonders gute Mischwirkung erzielbar ist.

Eine vorteilhafte Ausgestaltung besteht darin, daß jeder Rotor in einem gemeinsamen axialen Bereich eine Gruppe von in Umfangsrichtung verteilten, vorzugsweise zinkenförmigen Mitnehmern aufweist und daß jeder Rotor mindestens einen weiteren Mitnehmer aufweist, der radial außerhalb des Umlaufbereichs der anderen Mitnehmer angeordnet ist und dessen freies Ende oberhalb des freien Endes der anderen Mitnehmer endet. Dadurch kann dieser kürzere Mitnehmer die organischen Rückstände auf der Bodenoberfläche erfassen und auf die benachbarte, bereits bearbeitete Furche befördern, während die tiefer in den Boden eindringenden Mitnehmer die Bodenschicht zerklenern und vermischen und außerdem Erde auf die in der benachbarten Furche befindlichen organischen Rückstände werfen. Dazu können nach einer weiteren zweckmäßigen Ausbildung zumindest die mit ihren freien Enden das untere Ende des Rotors bildenden Mitnehmer einen Abschnitt aufweisen, der als radial fördernde Wurfschaufel ausgebildet ist.

Sind die Wurfelschaufeln radial auswärts fördernd ausgebildet, wird verstärkt Erde auf die in der benachbarten Furche befindlichen organischen Rückstände geworfen. Sind die Wurfschaufeln dagegen, radial einwärts fördernd gestaltet, wird die Erde in einer für Reihenkulturen besonders geeigneten Weise in Streifen mit einem reduzierten Anteil an organischer Masse angehäuft.

Statt als Rotor kann die Vorrichtung zur Übertragung der horizontal zur Arbeitsrichtung gerichteten Bewegungskomponente auch als Leitorgan ausgebildet sein, das um eine in einer etwa lotrechten und in Arbeitsrichtung verlaufenden Ebene liegende Schwenkachse umstellbar ist und das vorzugsweise als Wendekörper ausgebildet ist.

Eine besonders zweckmäßige Ausgestaltung besteht dabei darin, daß der Wendekörper in Bezug auf die Schwenkachse achsensymmetrisch ausgebildet ist und eine rechtsfördernde und eine linksfördernde Leitfläche aufweist, die über eine nach unten keilförmig zulaufende, gemeinsame Schar verbunden sind. Dadurch wird nicht nur das Eindringen von Material zwischen die beiden Leitflächen erschwert. Besonders vorteilhaft ist dabei vor allem, daß aufgrund des Wechsels zwischen den beiden Arbeitsstellungen des Wendekörpers die Schar ständig einer Schleifwirkung ausgesetzt ist und dadurch automatisch scharf bleibt.

Bei einem Gerät, mit dessen Tragrahmen mehrere Lockerungsschare verbunden sind, besteht eine bevorzugte Ausgestaltung darin, daß ein Tragarm gegenüber einem mit einem Zugfahrzeug verbindbaren Gerätekopf um eine etwa lotrechte Achse verschwenkbar ist, daß der Tragrahmen auf dem Tragarm gelagert und um eine etwa lotrechte Achse zwischen zwei Arbeitsstellungen umschwenkbar ist, in welchen die zu dieser Achse radial verlaufenden Abschnitte des Tragrahmens sich abwechselnd rechts bzw. links von einer diese Achse enthaltenden, in Arbeitsrichtung verlaufenden Ebene befinden, daß die Lockerungsschare jeweils mit einem Haltearm um in einer vertikalen und zur Längsrichtung des Tragrahmens rechtwinklig verlaufenden Ebene angeordnete Achsen verschwenkbar am Tragrahmen gelagert und zu gemeinsamer Bewegung untereinander und mit dem Tragarm derart gekoppelt sind, daß beim Verschwenken des Tragrahmens gegenüber dem Tragarm die Ausrichtung der Lockerungsschare gegenüber der Arbeitsrichtung erhalten bleibt.

Durch diese Konstruktion wird erreicht, daß beim Wechseln der Fahrtrichtung durch eine einzige, auf den Tragrahmen ausgeübte Verstellbewegung das gesamte Gerät von der einen in die andere Arbeitsstellung überführt werden kann, wobei außerdem die Lage der ersten Furche gegenüber dem Zugfahrzeug und die Arbeitsbreite des Geräts auf einfache Weise und mit einfachen Mitteln möglich ist.

Hierzu besteht eine besonders zweckmäßige Ausgestaltung darin, daß ein druckmittelbetriebener Arbeitszylinder den Tragarm querend einerseits mit Abstand von der Schwenkachse zwischen Tragarm und Gerätekopf am Gerätekopf und andererseits mit Abstand von der Schwenkachse zwischen Tragarm und Tragrahmen am Tragrahmen angreift.

Dadurch wird zugleich mit der Umschwenkung des Tragrahmens aus der einen in die andere Arbeitsstellung auch eine Schwenkbewegung des Tragarms in der einen oder anderen Schwenkrichtung erreicht, die zur Einstellung der ersten Furche dient.

Eine besonders einfache Lösung besteht dabei darin, daß im Verbindungsbereich zwischen Tragarm und Tragrahmen und im Verbindungsbereich zwischen Tragarm und Gerätekopf jeweils einstellbare Vorrichtungen zur Begrenzung des Schwenkwinkels zwischen Tragarm und Tragrahmen um die sie gelenkig verbindende Schwenkachse bzw. des Schwenkwinkels zwischen Tragarm und Gerätekopf um die sie gelenkig verbindende Schwenkachse bei der Umstellung von der einen in die andere Arbeitsstellung angeordnet sind. Durch die Einstellung des Schwenkwinkels um die Schwenkachse zwischen Tragarm und Tragrahmen wird die Arbeitsbreite des Geräts festgelegt, während die Einstellung des Schwenkwinkels zwischen dem Tragarm und dem Gerätekopf die Lage der ersten Furche gegenüber dem Zugfahrzeug bestimmt. In einfachster Weise können die einstellbaren Vorrichtungen aus Anschlagbolzen bestehen, welche in ausgewählte Bohrungen am Gerätekopf bzw. Tragrahmen eingesteckt werden können.

Eine weitere, sehr zweckmäßige Ausgestaltung besteht bei einem mit Rotoren ausgestatteten Gerät darin, daß der gemeinsame Antrieb der Rotoren eine Einrichtung zum Wechseln der Drehrichtung enthält, die jeweils beim Wechseln der Arbeitsstellung des Tragrahmens selbsttätig betätigbar ist.

Um die Lockerungswirkung zu verbessern, den Boden zu schonen und außerdem die Zugkraft zu reduzieren, besteht eine besonders zweckmäßige Ausgestaltung darin, daß jedes Lockerungsschar um eine etwa horizontale Achse gegenüber dem Tragrahmen verschwenkbar und über ein zur Erzeugung einer periodischen Schwingbewegung um diese Achse geeignetes Getriebe mit einem Antrieb des zugeordneten Rotors verbunden ist.

Noch eine weitere, sehr vorteilhafte Ausgestaltung ist es, daß in einem Abstand hinter dem Tragrahmen ein etwa parallel zum Tragrahmen ausgerichteter Abstreifer, wie etwa ein Rechen, ein Abstreifblech, eine Planierschiene, angeordnet und vorzugsweise mittels beidseitiger Arme um eine zur Längsrichtung des Tragrahmens etwa parallele Achse schwenkbar am Tragrahmen gehalten ist. Damit wird erreicht, daß bei der Bodenbearbeitung etwa auftretende grobe Schollen an der Oberfläche liegen bleiben. Derartige grobe Schollen werden von dem schräg zur Fahrtrichtung verlaufenden Abstreifer erfaßt und wandern am Abstreifer entlang, bis sie in eine offene Furche gelangen.

-Weitere vorteilhafte und zweckmäßige Ausgestaltungen der Erfindung ergeben sich aus der nun folgenden Beschreibung in Verbindung mit den Ansprüchen.

Anhand der nun folgenden Beschreibung der in der Zeichnung dargestellten Ausführungsbeispiele der Erfindung wird diese näher erläutert.

Es zeigt:

Fig. 1 eine schematische Draufsicht auf ein erstes Ausführungsbeispiel eines Bodenbearbeitungsgeräts,

Fig. 2 eine schematische, perspektivische Explosionsdarstellung des in Fig. 1 gezeigten Geräts mit Einzelheiten des Geräts,

Fig. 3 eine schematische, teilweise geschnittene Seitenansicht eines Teils des in den Fig. 1 und 2 gezeigten Geräts und

Fig. 4 eine schematische, unmaßstäbliche, teilweise perspektivische Seitenansicht eines Teils eines zweiten Ausführungsbeispiels eines Bodenbearbeitungsgeräts.

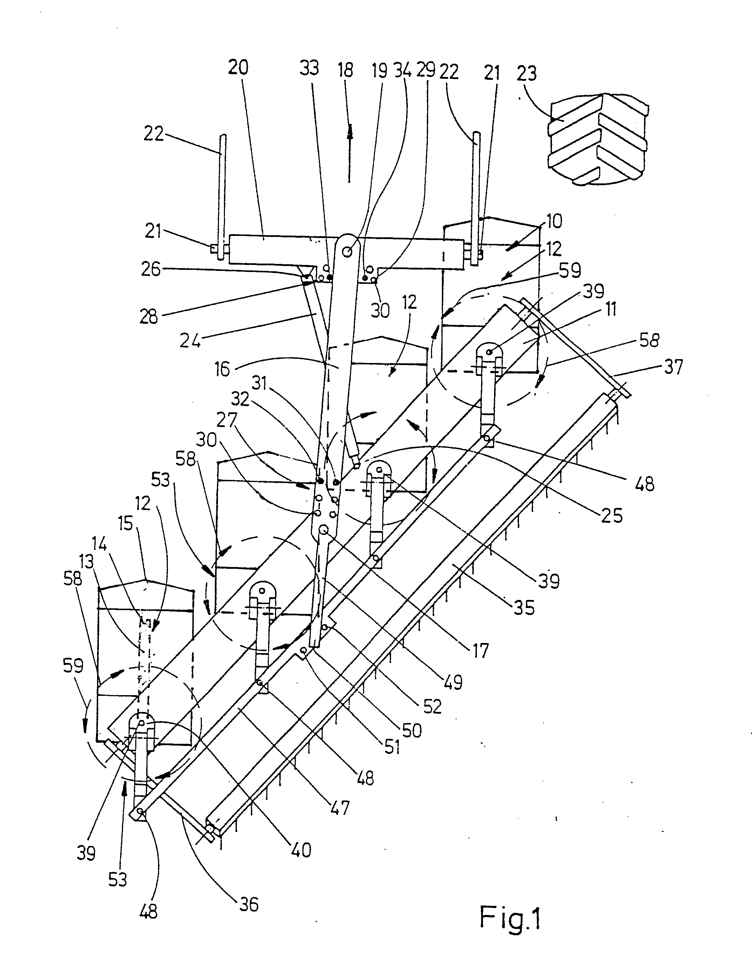

In Fig. 1 - 3 ist ein Gerät 10 gemäß einem ersten Ausführungsbeispiel gezeigt, das zur Bodenbearbeitung in der Landwirtschaft vorgesehen ist. Das Gerät 10 weist einen etwa balkenförmigen Tragrahmen 11 auf, entlang dem in aufeinanderfolgenden Abständen eine Reihe einzelner Lockerungsvorrichtungen 12 angeordnet ist. Die Lockerungsvorrichtungen 12 sind jeweils gleich ausgebildet und weisen einen etwa hakenförmig oder winkelförmig gekrümmten Haltearm 13 auf, an dessen freiem Ende 14 ein Lockerungsschar 15 angebracht ist.

Etwa im Bereich seiner Längsmitte greift am Tragrahmen 11 ein Tragarm 16 an, an dem der Tragrahmen 11 um eine im wesentlichen lotrechte Achse 17 schwenkbeweglich gehalten ist, der beispielsweise an einer dahinter laufenden Tragwalze oder an dahinter laufenden Traglagern abgestützt ist, wobei die Abstützung so ausgebildet ist, daß die Tragwalze bei Änderung der Arbeitsrichtung des Geräts zugleich mit dem Tragrahmen 11 um die Achse 17 verschwenkt wird. Mit seinem von der Achse 17 abgewandten, in Fahrtrichtung (Pfeil 18) nach vorn weisenden Ende ist der Tragarm 16 um eine ebenfalls im wesentlichen lotrechte Schwenkachse 19 schwenkbeweglich an einem Achskörper 20 gelagert. Der Achskörper 20 besteht z.B. aus einer runden Stange mit Zapfen 21 an beiden Enden, an denen Lenker 22 eines sogenannten Dreipunktbockes einer nicht gezeigten Zugmaschine angreifen können. Der Achskörper 20 wird zum Anbau an die Dreipunkthydraulik der nicht gezeigten Zugmaschine benutzt, von der in Fig. 1 lediglich das rechte Hinterrad 23 teilweise sichtbar ist, um die dadurch vorgegebene Fahrspur aufzuzeigen, was später noch für die Einstellung für die erste Furche bedeutsam ist.

Schräg zwischen dem Achskörper 20 und dem Tragrahmen 11 erstreckt sich zwischen beiden ein druckmittelbetriebener, z.B. hydraulischer, Arbeitszylinder 24, der schräg zum Tragarm 16 angeordnet ist und je nach Ausbildung des Tragarms 16 entweder unter diesem verläuft oder sich mit ausreichendem Bewegungsspiel durch eine Öffnung des Tragarms 16 hindurch erstreckt.

Mit einem Ende 25 greift der Arbeitszylinder 24 gelenkig auf einer Seite des Tragarms 16 mit Abstand von der Schwenkachse 17 am Tragrahmen 11 an. Mit seinem anderen Ende 26 greift der Arbeitszylinder 24 gelenkig auf der anderern Seite des Tragarms 16 mit Abstand von der Schwenkachse 19 am Achskörper 20 an. Geht man davon aus, daß das Gerät 10 mittels des Achskörpers 20 fest am Dreipunktbock der Zugmaschine gehalten wird, so daß der Achskörper 20 keine Relativbewegung in Bezug auf den Arbeitszylinder 24 oder sonstige Tele ausführen kann, und wird der Arbeitszylinder 24, ausgehend von der Stellung in Fg. 1 ausgeschoben, so stützt sich dessen Ende 26 am Achskörper 20 ab und ist somit raumfest gehalten. Das andere, ausfahrende Ende 25 bewirkt eine Schwenkung des Tragrahmens 11 um die Schwenkachse 17 in Fig. 1 im Uhrzeigersinn, d.h. rechts herum. Zugleich schwenkt der Tragarm 16 um die Schwenkachse 19 relativ zum Achskörper 20 in Fig. 1 entgegen dem Uhrzeigersinn, so daß sich das in Fig. 1 untere, am Tragrahmen 11 angreifende Ende des Tragarms 16 aus dieser Stellung nach rechts verlagert. Auf diese Weise ist mittels des Arbeitszylinders 24 der Tragrahmen 11 um die Schwenkachse 17 schwenkbar und dabei von links nach rechts und umgekehrt schrägstellbar. Gleichzeitig ist der Tragarm 16 in Bezug auf den Achskörper 20 um die dortige Schwenkachse 19 in beiden Richtungen schwenkbar. Durch diese Verstellbarkeit im Bereich der Schwenkachsen 17 und 19 ist mit einfachen Mitteln eine Einstellung des Geräts entsprechend den Arbeitsbedingungen möglich. Durch Schwenkung um die Achse 19 erfolgt die Einstellung des Geräts 10 für die erste Furche derart, daß sich die Bearbeitung direkt an die Fahrspur des rechten Hinterrades 23 anschließt. Durch die Schwenkverstellung um die Achse 17 erfolgt die Einstellung der jeweiligen Arbeitsbreite des Geräts 10.

An beiden Enden des Tragarms 16 ist jeweils eine Einstell-und Feststellvorrichtung 27 bzw. 28 angeordnet, die mit dem Tragrahmen 11 bzw. Achskörper 20 zusammenwirkt. Mittels der Vorrichtung 27 ist die jeweilige Schwenklage des Tragrahmens 11 um die Schwenkachse 17 relativ zum Tragarm 16 einstellbar und feststellbar. Mittels der Vorrichtung 28 ist die Schwenklage des Tragarms 16 um die Schwenkachse 19 relativ zum Achskörper 20 einstellbar und feststellbar.

Die Einstell-und Feststellvorrichtungen können jeweils aus einer Spindel mit Spindelmutter oder aus einem druckmittelbetriebenen, z.B. hydraulischen, Arbeitszylinder oder auch aus anderen, hierfür bekannten Elementen bestehen. Beim gezeigten Ausfüh rungsbeispiel ist jede Vorrichtung 27, 28 nach dem Prinzip von Lochschienen mit Steckbolzen ausgebildet.

Die Vorrichtung 27 weist am Tragarm 16 zu dessen beiden Seiten eine Anzahl von Stecklöchern 30 auf. Diese können nach einer anderen, nicht gezeigten Ausführungsform auch in einem Halter am Tragarm 16 oder am Tragrahmen 11 enthalten sein. In der Schwenklage des Tragrahmens 11 gemäß Fig. 1 sind beidseitig in zwei Stecklöchern 30 des Tragarms 16 jeweils Anschlagbolzen 31, 32 eingesteckt. In seiner gezeigten Schwenklage ist der Tragrahmen 11 mittels des Arbeitszylinders 24 an diesen derart herangezogen, daß er am in Fig. 1 rechten Anschlagbolzen 31 anschlägt, wobei der auf der anderen Seite befindliche Anschlagbolzen 32 in ausreichendem Abstand von dem Rand des Tragrahmens 11 verläuft, so daß der Tragrahmen 11 relativ zum Tragarm 16 ausreichend Spiel hat.

Die Vorrichtung 28 zwischen dem Achskörper 20 und dem Tragarm 16 kann in gleicher Weise wie die Vorrichtung 27 ausgebildet sein. Bei dem in Fig. 1 gezeigten Ausführungsbeispiel weist die Vorrichtung 28 am Achskörper 20 einen Halter 29 auf, der mit verschiedenen Stecklöchern 30 versehen ist. In der gezeigten Schwenklage des Tragarms 16 relativ zum Achskörper 20 ist auf der in Fig. 1 linken Seite des Tragarms 16 ein Anschlagbolzen 33 eingesteckt und ferner in Abstand von der in Fig. 1 rechten Seite des Tragarms 16 ein weiterer Anschlagbolzen 34. Durch die Schrägstellung des Arbeitszylinders 24 ist über diesen in der gezeigten Schwenkstellung der Tragarm 16 mit der in Fig. 1 linken Seite gegen den Anschlagblolzen 33 gezogen, während der andere Anschlagbolzen 34 in sol chem Abstand davon verläuft, daß ausreichendes Spiel herrscht.

Soll der Tragrahmen 11, ausgehend von der Position in Fig. 1, zur anderen Seite hin im Uhrzeigersinn um die Schwenkachse 17 geschwenkt werden und der Tragarm 16 entgegen dem Uhrzeigersinn um die Schwenkachse 19, so wird der Arbeitszylinder 24 aktiviert, dessen Kolbenstange in Fig. 1 nach unten ausfährt. Der Tragrahmen 11 bewegt sich dabei um die Achse 17 bis sein Rand am Anschlagbolzen 32 anschlägt und der Tragarm 16 - schwenkt dabei vom Anschlagbolzen 33 weg bis zur Anlage am Anschlagbolzen 34.

In Abstand hinter dem Tragrahmen 11 befindet sich ein nur schematisch angedeuteter Rechen 35, ein Abstreifblech oder eine Planierschiene, der bzw. die als Abstreifer wirksam ist bzw. sind. Der Rechen 34 ist etwa parallel zum Tragrahmen 11 ausgerichtet. Seine Wirkungsweise wird später beschrieben. Der Rechen 35 ist mittels beidseitiger Arme 36, 37 um eine zur Längsrichtung des Tragrahmens 11 etwa parallel verlaufende Achse · schwenkbar und etwa parallel zum Tragrahmen 11 am Tragrahmen 11 gehalten. Die Arme 36, 37 können am Rechen 35 schwenkbeweglich angreifen, z.B. unter Zulassung einer Schwenkbarkeit um eine zur Längsrichtung des Rechens 35 etwa parallele Achse. Auf diese Weise kann der Rechen 35 relativ zum Tragrahmen 11 auf und ab schwenken und auch in Höhenrichtung Schräglagen einnehmen und sich somit möglichst frei an die Bodenoberfläche anpassen.

Nicht weiter gezeigt ist, daß beispielsweise der Tragrahmen 11 an einer nachlaufenden Tragwalze oder nachlaufenden Tragrädern derart abgestützt ist, daß die Tragwalze bzw. die Tragräder bei Änderung der Arbeitsrichtung des Tragrahmens 11 durch Schwenkung um dessen Schwenkachse 17 selbsttätig mitschwenkt bzw. mitschwenken.

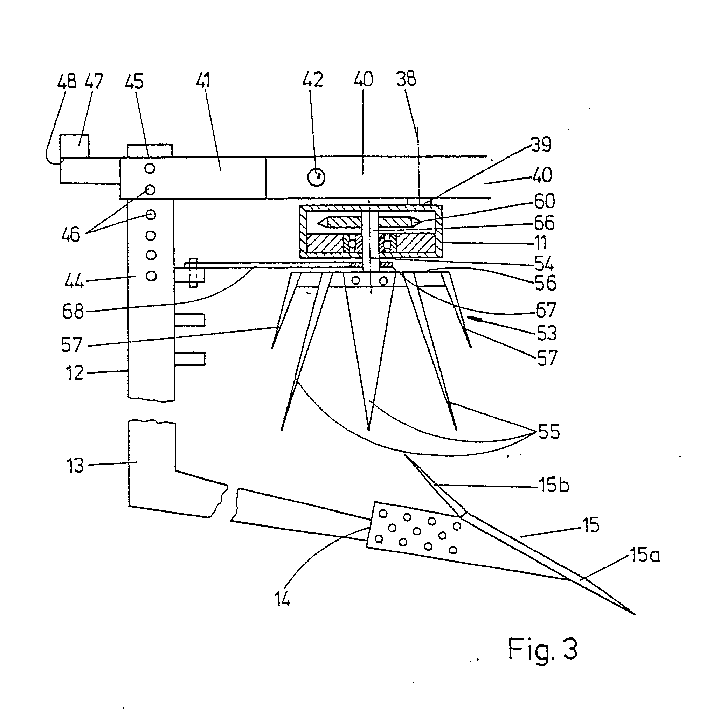

Der Tragrahmen 11 besteht aus einem Hohlkörper (Fig. 3), z.B. aus einem Vierkantrohr.

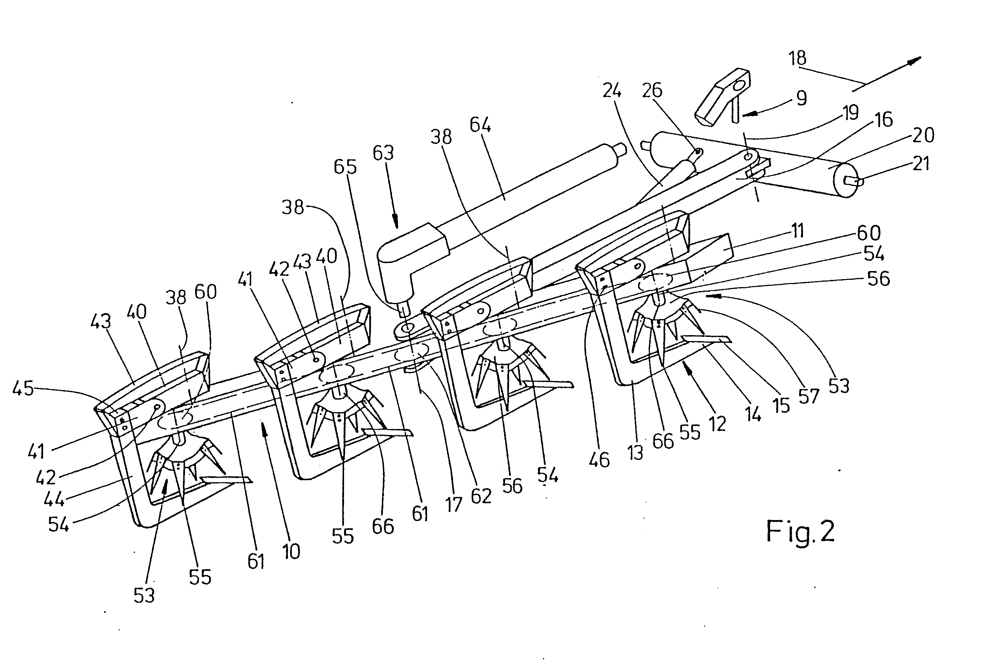

Nachfolgend sind Einzelheiten der Lockerungsvorrichtungen 12 beschrieben, von denen in den Fig. 2 und 3 lediglich eine Lockerungsvorrichtung 12 zu sehen ist.

Alle Lockerungsvorrichtungen 12 sind jeweils mit ihren Haltearmen 14 am Tragrahmen 11 um eine quer zur Längsrichtung des Tragrahmens 11 verlaufende, zumindest etwa lotrecht gerichtete Schwenkachse 38 frei schwenkbar gehalten. Die Schwenklagerung erfolgt z.B. mittels eines nach oben über den Tragrahmen 11 vorstehenden Zapfens 39. Beim gezeigten Ausführungsbeispiel verläuft die Schwenkachse 38 rechtwinklig zur Oberseite des Tragrahmens 11.

Bei einer anderen, nicht gezeigten Ausführungsform verläuft die Schwenkachse 38 einer jeden Lockerungsvorrichtung 12 gegenüber der Vertikalen geneigt. Dadurch läßt sich die Lockerungsrichtung der Lockerungsvorrichtungen 12 zur Seite hin verändern. Auf diese Weise ermöglichen die Lockerungsvorrichtungen 12 entweder ein stärkeres Wenden des Bodenmaterials oder bei gegensinniger Schrägstellung, ein weniger starkes Wenden, so daß der Benutzer wählen kann, ob er gerade ein stärkeres oder ein nicht so starkes Wenden wünscht.

Die einzelnen Haltearme 13 der Lockerungsvorrichtungen 12 weisen einen quer über den Tragrahmen 11 greifenden Armteil 40 auf, in dessen Bereich die schwenkbare Halterung um die Schwenkachse 38 vorgesehen ist. Statt dessen können die Armteile 40 je nach Umständen auch in den Tragrahmen 11 hineingreifen oder diesen untergreifen. Der Armteil 40 ist z.B. dadurch zweiteilig ausgebildet, daß an ihm um eine etwa horizontale, im Abstand von der vertikalen Schwenkachse 38 verlaufende Schwenkachse 42 schwenkbar ein hinterer Teil 41 gelagert ist. Auf diese Weise weist jede Lockerungsvorrichtung 12 eine Steinsicherung gegen Beschädigung, z.B. beim Auftreffen auf Steine oder dergleichen, auf. Die Ausschwenkung des mit dem hinteren Teil 41 des Armteils 40 verbundenen Haltearms 13 mit der jeweils an ihm angebrachten Lockerungsvorrichtung 12 erfolgt gegen die Wirkung einer Rückstellkraft, die hier von einer Feder 43 in Form einer Blattfeder aufgebracht wird, die mit einem Ende am Armteil 40 jenseits der Schwenkachse 42 und mit ihrem anderen Ende am hinteren Teil 41 auf der anderen Seite der Schwenkachse 42 angreift und beide Teile 40, 41 um die Schwenkachse 42 voneinander wegdrückt. Die Anlenkung der Blattfeder 43 am zweiten Teil 41 kann in Fg. 2 auch noch weiter nach links außen versetzt sein. Auf jeden Fall ist die Länge der Blattfeder 43 so groß gewählt, daß die Blattfeder 43 ausreichend ausfedern kann.

Jede Lockerungsvorrichtung 12 ist in Bezug auf den Tragrahmen 11 höhenverstellbar gehalten. Beim gezeigten Ausführungsbeispiel ist am freien Ende 14 der das Schar 15 tragende Haltearmteil 44 an dem über den Tragrahmen 11 greifenden Armteil 40 und relativ zu diesem in Höhenrichtung verstellbar und feststellbar gehalten. Hierzu ist z.B. am in Fig. 2 linken Ende des hinteren Teiles 41 eine Öffnung 45 vorgesehen, durch die das nach oben weisende Ende des Haltearmteils 44 hindurchgesteckt und in der jeweiligen Höhenstellung mittels Querbolzen 46 darin gesichert ist. Zweckmäßigerweise entspricht der Querschnitt der Öffnung 45 dem Querschnitt des darin eingreifenden Endes des Haltearmteils 44, wodurch zugleich eine Verdrehsicherung gewährleistet ist.

Jedes Schar 15 ist am Ende 14 des Haltearms 14 höhenverstellbar und/oder längsverstellbar und/oder bezüglich seines Angriffswinkels verstellbar gehalten. Dadurch kann das Schar 15, bezogen auf Fig. 3, weiter nach rechts oder nach links, bzw. nach oben oder nach unten verstellt werden, oder es wird das Schar 15 um eine etwa rechtwinklig zur Zeichnungsebene verlaufende Achse in Bezug auf das Ende 14 des Haltearms 13 geschwenkt, so daß sich dadurch der Angriffswinkel des Schars 15 und somit die Wirkungsrichtung bei der Lockerung und beim Aufwerfen des Bodens verändert.

In den Fig. 2 und 3 ist ein Schar 15 gezeigt, das einen spitzwinklig angestellten vorderen Teil 15a und einen demgegenüber steileren, daran anschließenden hinteren Teil 15b aufweist.

Der vordere Teil 15a hebt bei der Bearbeitung den Boden an, worauf der sich anschließende hintere Teil 15b, sofern er entsprechend stark ansteigt, ein rollenförmiges Aufwerfen des Bodens in den Wirkungsbereich des Rotors 53 bewirkt und dadurch eine besonders intensive Vermischung fördert. Das Lockerungsschar kann aber auch so ausgebildet sein, daß der abgehobene Bodenstreifen über das Schar weggleitet und nur seine obere Schicht der Einwirkung des Rotors ausgesetzt wird.

Bei einer anderen, nicht gezeigten Ausführungsform weist jedes Schar statt dessen eine im wesentlichen kontinuierlich von vorn nach hinten ansteigende Oberfläche auf.

Die Form und spezielle Ausbildung des Lockerungsschars 15 ist nahezu beliebig. Es können alle dem Fachmann bekannten Gestaltungsformen angewandt werden. Insbesondere kann für spezielle Zwecke auch eine Form gewählt werden, die geeignet ist, den Boden nicht nur anzuheben, sondern auch zur Seite zu wenden.

Aus den Fig. 1 und 2 geht hervor, daß alle Lockerungsvorrichtungen 12 in Abstand von der jeweiligen etwa lotrechten Schwenkachse 38 über eine Verbindungsstange gelenkig miteinander gekoppelt sind, wobei diese Verbindungsstange 47 an den Tragarm 16 derart angekoppelt ist, daß alle Lockerungsvorrichtungen 12 etwa in Fahrtrichtung gemäß Pfeil 18 gehalten sind und beim Umschwenken des Tragrahmens 11 um die Schwenkachse 17 relativ zum Tragarm 16 etwa in Fahrtrichtung ausgerichtet bleiben. Die Verbindungsstange 47 greift jeweils am hinteren Teil 41 des Armteils 40 aller Lockerungsvorrichtungen 12 im Bereich von Gelenken 48 gelenkig an. Die Gelenke 48 und die Verbindungsstange 47 liegen so hoch, daß der Boden darunter zwischen den Lockerungsvorrichtungen 12 hindurchfließen kann und auch bei einer Höhenverstellung der Lockerungsvorrichtungen 12 die Verbindungsstange 47 nicht versetzt werden muß.

Der Tragarm 16 weist eine über die Schwenkachse 17 und den Tragrahmen 11 nach hinten hinausführende Verlängerung 49 mit einem Ende 50 auf, das unter Belassung einer relativen Schwenkbarkeit mit Bewegungsspiel zwischen zwei Bolzen 51, 52 auf der Verbindungsstange 47 eingreift und dadurch mit der Verbindungsstange 47 gekoppelt ist. Auf diese Weise ist gewährleistet, daß beim Schwenken des Tragrahmens 11 um die Schwenkachse 17 relativ zum Tragarm 16 die Lockerungsvorrichtungen 12 nach wie vor zumindest im wesentlichen in Fahrtrichtung ausgerichtet bleiben.

Es versteht sich gleichwohl, daß die Lockerungsvorrichtungen 12 auch ohne irgendeine Führung umgeschwenkt werden, da der Bodenwiderstand die Haltearme 13 stets in die richtige Stellung drückt. Es empfiehlt sich jedoch, vorzugsweise den verschiedenen Arbeitsbreiten entsprechende Anschläge vorzuziehen, die verstellbar sind und an denen die Haltearme 13 der Lockerungsvorrichtungen 12 dann jeweils anschlagen. Von Vorteil ist es, wenn an den Haltearmen 13, z.B. nahe der Schare 15, Anlageschienen angebracht sind, die ebenfalls in den Boden greifen und den Seitendruck aufnehmen.

Eine weitere, wesentliche Besonderheit des Geräts 10 besteht darin, daß zumindest einigen Lockerungsvorrichtungen 12, vorzugsweise jeder Lockerungsvorrichtung 12, wie gezeigt, ein besonderer Rotor 53 zugeordnet ist. Jeder Rotor 53 befindet sich im Bereich der Lockerungsvorrichtung 12 und dabei, wie insbesondere Fig. 3 zeigt, oberhalb des freien Endes 14 des Haltearms 13 und des dortigen Schars 15.

Jeder Rotor 53 ist am Tragrahmen 11 um eine etwa lotrechte Drehachse 54 drehbar gelagert. Jeder Rotor 53 weist zumindest einen nach unten und zum unteren Ende 14 der jeweils zugeordneten Lockerungsvorrichtung 12 gerichteten Mitnehmer 55 in Form eines Zinken auf, der in Bezug auf die Drehachse 54 vorzugsweise schräg nach außen gestellt ist. Beim gezeigten Ausführungsbeispiel sind insgesamt vier in gleichen Umfangswinkelabständen voneinander angeordnete Mitnehmer 55 vorgesehen, die an einem Zinkenträger 56 fest angebracht sind, der z.B. aus einer Platte besteht. Die Mitnehmer 55 sind alle gleich lang. Mittels jedes Rotors 53 wird die von dem zugeordneten Lockerungsschar 15 aufgeworfene Erde in eine vom vorhergehenden Lockerungsschar 15 mit Rotor 53 geschaffene Furche befördert und gleichzeitig mit organischen Rückständen des Feldes gemischt. Durch das unter und vor dem Rotor 53 arbeitende Lockerungsschar 15 wird dabei eine gründliche Bodenlockerung erreicht.

Wie die Fig. 2 und 3 zeigen, weist jeder Rotor 53 mindestens einen weiteren Mitnehmer 57 z.B. in Form ebenfalls eines Zinkens auf, der in größerem Radialabstand am Zinkenträger 56 angeordnet und außerdem kürzer bemessen ist als die anderen Mitnehmer 55. Beim gezeigten Ausführungsbeispiel sind zwei solche kürzere Mitnehmer 57 einander diametral gegenüberliegend angeordnet. Mittels dieser kürzeren Mitnehmer 57 wird etwaiges auf der Erdoberfläche liegendes Stroh oder Kraut zur Seite geräumt, so daß es auf die dortige Furche fällt und vom nachfolgend aufgeworfenen Boden bedeckt wird.

Alle Rotoren 53 mit ihren vertikalen Drehachsen 54 sind längs des Tragrahmens 11 in etwa gleich großen Abständen voneinander angeordnet. Sie sind alle gemeinsam in der einen Richtung gemäß Pfeil 58 oder gegensinnig dazu gemäß Pfeil 59 antreibbar und zwar vorzugsweise mit niedriger Drehzahl, damit dadurch dem Aufbau im Boden mit einem Gefüge von großen und kleinen Bodenteilen ausreichend Rechnung getragen wird.

Die dem gemeinsamen Antrieb der Rotoren 53 dienenden Getriebeteile sind zweckmäßigerweise innerhalb des Tragrahmens 11 angeordnet. Beim gezeigten Ausführungsbeispiel erfolgt der Antrieb eines jeden Rotors 53 über ein Kettengetriebe. Jeder Rotor 53 weist dementsprechend ein dem Antrieb dienendes Kettenrad 60 auf, wobei alle Kettenräder 60 der Rotoren 53 über Ketten 61 getrieblich miteinander gekuppelt sind. Die Kettenräder 60 und die Ketten 61 verlaufen innerhalb des Tragrahmens 11. Im Bereich der Schwenkachse 17 des Tragrahmens 11 befindet sich ein zweckmäßigerweise dazu koaxiales Antriebsrad 62, über das die Ketten 61 geführt sind, und von dem aus der Antrieb aller Rotoren 53 erfolgt.

Für den Antrieb des Antriebsrades 62 ist am Tragarm 16, z.B. an dessen Oberseite, ein Getriebe 63 angebracht, das insbesondere als umschaltbares Winkelgetriebe ausgebildet ist. Die vertikale Achse des Getriebes 63 verläuft koaxial zur Schwenkachse 17 des Tragrahmens 11. Zum Antrieb des Getriebes 63 dient eine Antriebswelle 64, die in üblicher Weise an die vorhandene Zapfwelle der nicht gezeigten Zugmaschine angeschlossen wird.

Der Abtrieb des Getriebes 63, in Fig. 2 verdeutlicht durch einen Abtriebszapfen 65, ist mit dem Antriebs rad 62 im Tragrahmen 11 zu dessen Antrieb in der einen bzw. gegensinnigen Richtung getrieblich gekuppelt. Da die Abtriebsachse des Abtriebszapfens 65 koaxial zur Schwenkachse 17 verläuft, also genau im Schwenkpunkt des Tragsrahmens 11 sitzt, kann das Getriebe 63 fest auf dem Tragarm 16 montiert werden, ohne daß dabei die Schwenkung des Tragrahmens 11 behindert wäre. Das hinsichtlich seiner Drehrichtung umschaltbare Getriebe 63 kann dabei beim Umschwenken des Tragrahmens 11 um dessen Schwenkachse 17 selbsttätig hinsichtlich seiner Antriebsrichtung umkehrbar sein. Dies kann auch durch eine Wechselschaltung geschehen. Beim Umschwenken des Tragrahmens 11 wird dann die Drehrichtung der Rotoren 53, z.B. von derjenigen gemäß Pfeil 58 (Fig. 1), selbsttätig in die gegensinnige Richtung gemäß Pfeil 59 (Fig. 2) umgekehrt.

Eine weitere Besonderheit zeigt Fig. 3. Danach ist jede Lockerungsvorrichtung 12 vom Antrieb des ihm zugeordneten Rotors 53 aus, z.B. um die horizontale Schwenkachse 42 oder auch um eine vertikale Achse, periodisch hin-und hergehend antreibbar. Dies führt zu einer intensiven Lockerungswirkung, schont den Boden und hat noch den Vorteil, daß eine geringere Zugkraft benötigt wird. Beim gezeigten Ausführungsbeispiel greift an der Antriebswelle 66 des Rotors 53 ein Exzenterantrieb 67 an, dessen Hebel 68 an den Haltearm 13 der Lockerungsvorrichtung 12 angekoppelt ist. Der Exzenterantrieb 67 wird von der Antriebswelle 66 umlaufend mitgenommen und führt wegen der Exzentrizität zu einer hin-und hergehenden Bewegung des Hebels 68.

Die jeweilige, durch den Zapfen 39 einer jeden Lokkerungsvorrichtung 12 gebildete Schwenkachse 48 ist zweckmäßigerweise der Drehachse 54 des zugeordneten Rotors 53 eng benachbart. Sie kann auch damit zusammenfallen oder auch zwischen den Rotoren 53 verlaufen.

Bei einem abgewandelten Ausführungsbeispiel des Rotors weist dieser eine z.B. etwa glockenförmige, rotationssymmetrische Wandung auf, von der etwa horizontal ein oder mehrere Mitnehmer, z.B. Zinken, abstehen.

Nachfolgend ist die Wirkungsweise des beschriebenen Geräts 10 erläutert. Dabei wird von der Bestriebstellung gemäß der Fig. 1 und 2 ausgegangen. Das Gerät 10 wird mittels der nicht gezeigten Zugmaschine in Fahrtrichtung 18 gezogen. Die einzelnen Lockerungsvorrichtungen 12 greifen dabei mit ihren Scharen 15 in den Boden ein, wobei der Boden insbesondere durch den vorderen Teil 15a angehoben wird und der sich anschließende Teil 15b jedes Schars bei entsprechender Steigung den Boden nach vorn rollenförmig aufwirft, wobei dies genau im Arbeitsbereich des Rotors geschieht, bzw. in dem Bereich, den die Mitnehmer 55 des Rotors 53 in Richtung auf die benachbarte, bereits bearbeitete Furche durchlaufen.

Die oberhalb der jeweils zugeordneten Lockerungsvorrichtungen 12 um lotrechte Achsen arbeitenden Rotoren 53 ermöglichen eine Stoppelbearbeitung, bei der organische Rückstände auf dem Feld flach eingemischt werden, so daß eine optimale Verrottung möglich ist. Das Keimen der ausgefallenen Unkräuter und Getreide kann dabei begünstigt werden. Gleichzeitig wird das ange strebte Ziel erreicht, im Laufe des Jahres entstandene Verdichtungen möglichst in einem Arbeitsgang wieder aufzulockern.

Auch eine Herbstbodenbearbeitung ist in der gleichen Weise möglich, bei der angestrebt wird, die organischen Rückstände auf dem Feld, z.B. Maisstroh, Rübenblatt oder dergl., derart einzumischen, daß eine Verrottung derselben gewährleistet ist und eine in einem Arbeitsgang nachfolgende Saat ermöglicht wird. Außerdem werden auch hier Bodenverdichtungen soweit aufgelockert, daß die neue Saat nicht unter stauender Nässe leidet. Während man bei der zuvor beschriebenen Stoppelbearbeitung die Höheneinstellung der Lockerungsvorrichtungen 12 relativ zu den Rotoren 53 so wählt, daß die Rotoren 53 oberhalb der Lockerungsvorrichtungen 12 flach arbeiten, werden bei der beschriebenen Herbstbodenbearbeitung die Rotoren 53 so tief eingestellt, daß sie die organischen Rückstände derart tief in den Boden einmischen, daß eine Aussaat möglich ist und die Lockerungsvorrichtung 12 tieferliegende Verdichtungen auflockert.

Insgesamt ermöglicht das Gerät 10 bei großen organischen Strohmassen eine verstopfungsfreie Bodenbearbeitung, wobei eine optimale Arbeitsqualität für den jeweiligen Bedarfsfall in einem Arbeitsgang erreicht wird. Bei der beschriebenen Bearbeitung bewirken die einzelnen Rotoren 53, daß die von der Lockerungsvorrichtung 12 aufgeworfene Erde seitlich wegbefördert wird und dabei die Erde in eine von der vorhergehenden Lockerungsvorrichtung 12 mit Rotor 53 geschaffene Furche befördert und gleichzeitig mit den organischen Rückständen des Feldes gemischt wird. Dabei wird eine gründliche Bodenlockerung durch die unter und vor dem Rotor 53 arbeitende Lockerungsvorrichtung 12 erreicht.

Wie erläutert, ermöglicht die Höhenverstellbarkeit der einzelnen Lockerungsvorrichtungen 12 die freie Wahl der Einmischtiefe. Aufgrund der beschriebenen Anordnung der Lockerungsvorrichtungen 12 relativ zu den Rotoren 53 ist erreicht, daß die Lockerungswirkung entweder direkt vor oder direkt unterhalb des jeweiligen Rotors 53 beginnt. Durch Verstellung z.B. des Angriffswinkels des Schars 15 am Haltearm 13 ist eine Einstellung derart möglich, daß der vom Rotor nicht erfaßte Teil des von der Lockerungsvorrichtung 12 angehobenen Bodenstreifens stärker, weniger stark oder gar nicht gewendet wird. Durch Abkröpfen der Schare 15 und durch die Schrägstellung der Haltearmteile 44 läßt sich ein Wenden noch verstärken.

Aufgrund der Längenverstellbarkeit des Schars 15 in bezug auf den Haltearm 13, in Fig. 3 nach rechts oder nach links, kann der Lockerungsbeginn von unter dem Rotor 53 weiter in einen Bereich vor dem Rotor 53 bzw. gegensinnig verlegt werden. Die Wirkungsrichtung des Schars 15 beim Lockern bei der Bewegung in Fahrtrichtung 18 ist schräg nach vorn und dabei nach oben gerichtet. Wird die Schwenkachse 38, um die die einzelnen Lockerungsvorrichtungen 12 am Tragrahmen 11 frei drehbar gelagert sind, in Fahrtrichtung oder gegensinnig dazu schräg gestellt, so läßt sich dadurch die Lockerungsrichtung zur Seite hin verändern und die Wendewirkung verstärken.

Sollte bei der Bearbeitung eine Lockerungsvorrichtung 12 auf Steine oder dergl. Hindernisse auftreffen, ist ein Ausweichen durch Schwenken um die Horizontalachse 42 gegen die Wirkung der Feder 43 möglich. Dadurch ist eine Sicherung gegen Beschädigung, Abscheren oder dergl. geschaffen. Es versteht sich, daß auch andere, für sich bekannte Steinsicherungen zur Anwendung kommen können.

Dadurch, daß die einzelnen Lockerungsvorrichtungen 12 z.B. über die Verbindungsstange 47 in beschriebener Weise miteinander verbunden sind, wird eine genaue Geradeausführung der Schare 15 gewährleistet. Der Abstreifer 34 verhindert, daß etwaige Grobschollen, die bei der Bodenbearbeitung entstehen können, an der Oberfläche liegen bleiben. Der parallel zum Tragrahmen 11 laufende Abstreifer 35 streift an der Oberfläche liegende, grobe Schollen in die offenen Furchen hinein, während feine Schollen, die durch die Zinken hindurchpassren, von den Zinken überfahren werden.

Aufgrund des kürzeren Mitnehmers 57 jedes Rotors 53 wird etwaiges, auf der Erdoberfläche liegendes Stroh zur Seite geräumt, so daß es in die daneben befindliche Furche fällt und sodann von nachfolgend aufgeworfenem Boden bedeckt wird. Diese Überdeckung kann dadurch verstärkt werden, daß an den Rotorzinken zumindest abschnittsweise eine wurfschaufelartige Profilierung mit radial auswärts gerichteter Wurfrichtung vorgesehen ist.

Durch Betätigung des Arbeitszylinders 24 und Schwenkung im Bereich der Schwenkachse 19 ist eine Einstellung derart möglich, daß der in Fig. 1 ganz rechts befindliche Rotor 53 direkt anschließend an die vom Hinterrad 23 gebildete Fahrspur arbeitet. Es erfolgt somit eine präzise Einstellung für die erste Furche, ohne daß hier ein unbearbeiteter Zwischenbereich verbleibt. Durch Einstellung um die Schwenkachse 19 erfolgt eine Anpassung hinsichtlich der Arbeitsbreite des Geräts 10 derart, daß die in Fahrtrichtung 18 von den einzelnen Lockerungsvorrichtungen 12 und Rotoren 53 bearbeiteten Furchen möglichst zwischenraumfrei unmittelbar aneinander anschließen oder sich gar überdecken, so daß auch hier keine unbearbeiteten Zwischenräume verbleiben. Die Verstellung der Arbeitsbreite durch die Anschlagbolzen 31 - 34 ermöglicht durch optimale Einstellung der Furchenbreite die bestmögliche Arbeitsqualität in jedem Boden, d.h., je schwerer der Boden, desto schmaler wird die Arbeitsbreite durch Umstecken der Anschlagbolzen 31 - 34 eingestellt.

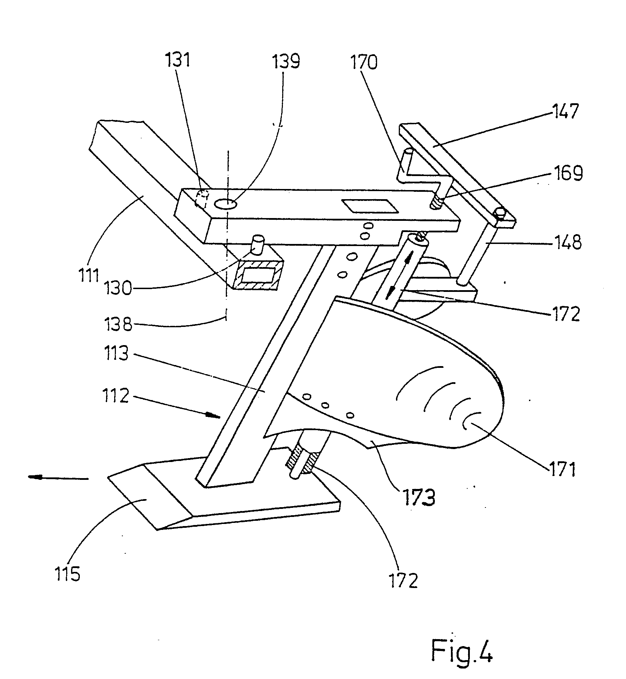

Bei dem in Fig. 4 gezeigten zweiten Ausführungsbeispiel sind für die Teile, die dem ersten Ausführungsbeispiel entsprechen, um 100 erhöhte Bezugszeichen verwendet, so daß dadurch zur Vermeidung von Wiederholungen auf die Beschreibung des ersten Ausführungsbeispiels Bezug genommen ist.

Beim zweiten Ausführungsbeispiel gemäß Fig. 3 sind keine Rotoren gezeigt, sie können jedoch ebenso vorhanden sein. Statt dessen ist jede Lockerungsvorrichtung 112 mit einem über eine Spindel 160 mit Kurbel 170 höhenverstellbaren Wendekörper 171, insbesondere einem Wendeblech, versehen. Der Wendekörper 171 ist achsensymmetrisch derart ausgebildet, daß ein Arbeiten sowohl zur linken als auch zur rechten Seite des Wendekörpers 171 möglich ist. Am unteren Ende bildet der Wendekörper 171 ein keilförmiges Schar 173. Der Wendekörper 171 ist hier am Haltearm 113 der Lokkerungsvorrichtung 112 etwa parallel zu diesem um die Achse eines mit geringem Abstand hinter dem Haltearm 113 angeordneten Rohrs 172 - schwenkbar gehalten. Mit dem über das Rohr 172 nach vorn hin überstehenden Teil legt sich der Wendekörper 171 dabei am Haltearm 113 an. Die durch das Rohr 172 vorgegebene Schwenkachse des Wendekörpers 171 verläuft dabei hinter den vorderen Spitzen des Wendekörpers 171 derart, daß beim Umschwenken des Tragrahmens 111 um dessen Schwenkachse in beschriebener Weise die Spitzen des Wendekörpers 171 selbsttätig seitlich an dem Haltearm 113 der Lockerungsvorrichtung 112 anschlagen. Dadurch sind Zwischenräume zwischen dem Haltearm 113 und dem Wendekörper 171 vermieden, in die sonst möglicherweise Bodenpartikel eindringen und ein Verstopfen oder Klemmen verursachen könnten. Aufgrund der - schwenkbaren Halterung des Wendekörpers 171 ist es möglich, nach links und nach rechts zu wenden. Durch das regelmäßige Links-und Rechtsdrehen des Wendekörpers 171 wird dieser ständig beidseitig abgeschliffen, so daß das Schar 173 automatisch scharf bleibt.

Jeder Wendekörper 171 kann mittels am Wendekörper 171 angreifender, nicht gezeigter Ketten, Seile oder ähnlicher Halterungen in bezug auf seine Schwenkachse, die hier durch das Rohr 172 vorgegeben ist, am Tragrahmen 111 gehalten sen. Die Ketten greifen am Rahmen des Wendekörpers 171 an. Statt desssen oder zusätzlich dazu können entsprechend dem ersten Ausführungsbeispiel die einzelnen Wendekörper 171 in Abstand von ihrer Schwenkachse auch mittels einer Führungsstange 147 gelenkig miteinander verkuppelt sein, die z.B. wie beim ersten Ausführungsbeispiel mit dem Tragarm 16 gekoppelt ist. Dies ist in Fig. 4 nur angedeutet.

Bei einer anderen, nicht gezeigten Ausführungsform ist jeder Wendekörper 171 direkt um den Haltearm 113 der Lockerungsvorrichtung 112 - schwenkbar gehalten, wobei der Halterarm 113 dann eine im Querschnitt runde äußere Umfangsfläche aufweist und wobei der Wendekörper dann auf dieser Umfangsfläche schwenkbar gelagert ist und längs dieser in Höhenrichtung verstellbar ist. Hierbei muß ein linker und ein rechter Anschlag am Haltearm 113 für den Wendekörper 171 vorgesehen sein. Weitere Einzelheiten des Wendekörpers 171 selbst bedürfen keiner besonderen Beschreibung, da der Wendekörper 171 z.B. wie ein an sich bekanntes Wendeblech, nur demgegenüber achsensymmetrisch verdoppelt, ausgebildet ist. Derartige, in der Höhe verstellbare Wendebleche erlauben es, eine frei wählbare Bodenschicht zu wenden. Die schwenkbare Anordnung ermöglicht je nach Stellung ein Wenden nach links oder nach rechts.

## Ansprüche

1. Gerät zur Bearbeitung landwirtschaftlich genutzter Böden mit mindestens einem an einem Tragrahmen (11) angeordneten Lockerungsschar (15) mit einer zum Ablösen und zeitweiligen Anheben eines Bodenstreifens entgegen der Arbeitsrichtung (18) ansteigenden Scharoberfläche, *dadurch gekennzeichnet*, daß im Bereich der Lockerungsschar (15) mit einstellbarem, vertikalem Abstand von der Scharoberfläche eine Vorrichtung (53, 171) zur Übertragung mindestens einer etwa horizontal und quer zur Arbeitsrichtung (18) gerichteten Bewegungskomponente auf die obere Schicht des vom Lockerungsschar angehobenen Materials angeordnet ist.

2. Gerät nach Anspruch 1,*dadurch gekennzeichnet*, daß die Vorrichtung (53, 171) zur Übertragung einer Bewegungskomponente zwischen einer rechtsfördernden und einer linksfördernden Einstellung umstellbar ist.

3. Gerät nach einem der Ansprüche 1 oder 2, *dadurch gekennzeichnet*, daß die Vorrichtung zur Übertragung mindestens einer etwa horizontal und quer zur Arbeitsrichtung gerichteten Bewegungskomponente aus einem um eine etwa vertikale Drehachse (54) drehbaren Rotor (53) besteht.

4. Gerät nach Anspruch 2, *dadurch gekennzeichnet*, daß die Vorrichtung zur Übertragung mindestens einer etwa horizontal und quer zur Arbeitsrichtung gerichteten Bewegungskomponente aus einem um eine in einer etwa lotrechten und in Arbeitsrichtung (18) verlau fenden Ebene liegende Schwenkachse (172) umstellbaren Leitorgan (171) besteht.

5. Gerät nach Anspruch 3, *dadurch gekennzeichnet*, daß jeder Rotor (53) mit mindestens einem Mitnehmer (55, 57) versehen ist.

6. Gerät nach Anspruch 5, *dadurch gekennzeichnet*, daß jeder Rotor (53) zumindest einen nach unten gerichteten Mitnehmer aufweist, von dem zumindest der in Fahrtrichtung (18) vordere Bahnabschnitt seines freien Endes den Bereich des Lockerungsschars (15) überquert.

7. Gerät nach einem der Ansprüche 5 oder 6, *dadurch gekennzeichnet*, daß jeder Rotor (53) zumindest einen schräg nach außen und unten gerichteten Mitnehmer (55, 57) aufweist.

8. Gerät nach einem der Ansprüche 6 oder 7, *dadurch gekennzeichnet*, daß jeder Rotor (53) in einem gemeinsamen axialen Bereich eine Gruppe von in Umfangsrichtung verteilten Mitnehmern (55, 57) aufweist und daß jeder Rotor (53) mindestens einen weiteren Mitnehmer (57) aufweist, der radial außerhalb des Umlaufbereichs der anderen Mitnehmer (55) angeordnet ist und dessen freies Ende oberhalb des freien Endes der anderen Mitnehmer (55) endet.

9. Gerät nach einem der Ansprüche 5 bis 8, *dadurch gekennzeichnet*, daß zumindest die mit ihren freien Enden das untere Ende des Rotors (53) bildenden Mitnehmer (55) einen Abschnitt aufweisen, der als radial fördernde Wurfschaufel ausgebildet ist.

10. Gerät nach einem der Ansprüche 4 bis 9, *dadurch gekennzeichnet*, daß am Tragrahmen (11) mehrere Lockerungsschare (15) und diesen zugeordnete Rotoren (53) in etwa gleich großen Abständen in Fahrtrichtung gestaffelt angeordnet und die Rotoren (53) gemeinsam antreibbar sind.

11. Gerät nach Anspruch 4, *dadurch gekennzeichnet*, daß das Leitorgan (171) als Wendekörper ausgebildet ist.

12. Gerät nach Anspruch 11, *dadurch gekennzeichnet*, daß der Wendekörper (171) in Bezug auf die Schwenkachse ( 172) achsensymmetrisch ausgebildet ist und eine rechtsfördernde und eine linksfördernde Leitfläche aufweist, die über eine nach unten keilförmig zulaufende, gemeinsame Schar verbunden sind.

13. Gerät nach Anspruch 12, *dadurch gekennzeichnet*, daß jedes Lockerungsschar (15) über einen Haltearm (113) mt dem Tragrahmen (11) verbunden ist, die Schwenkachse (172) des Wendekörpers (171) hinter dem Haltearm (113) verläuft und der Wendekörper (171) je einen der rechtsfördernden und der linksfördernden Stellung zugeordneten Anschlag aufweist, der in der zugeordneten Stellung am Haltearm (113) anschlägt.

14. Gerät nach einem der vorhergehenden Ansprüche, mit dessen Tragrahmen mehrere Lockerungsschare (15) verbunden sind, *dadurch gekennzeichnet*, daß ein Tragarm (16) gegenüber einem mit einem Zugfahrzeug verbindbaren Gerätekopf (20) um eine etwa lotrechte Schwenkachse (19) verschwenkbar ist, daß der Tragrahmen (11) auf dem Tragarm (16) gelagert und um eine etwa lotrechte Schwenkachse (17) zwischen zwei Ar beitsstellungen umschwenkbar ist, in welchen die zu dieser Schwenkachse (17) radial verlaufenden Abschnitte des Tragrahmens (11) sich abwechselnd rechts bzw. links von einer diese Achse (17) enthaltenden, in Arbeitsrichtung (18) verlaufenden Ebene befinden, daß die Lockerungsschare (15) jeweils mit einem Haltearm (13) um in einer vertikalen und zur Längsrichtung des Tragrahmens (11) rechtwinklig verlaufenden Ebene angeordnete Achsen (38) verschwenkbar am Tragrahmen (11) gelagert und zu gemeinsamer Bewegung untereinander und mit dem Tragarm (16) derart gekoppelt sind, daß beim Verschwenken des Tragrahmens (11) gegenüber dem Tragarm (16) die Ausrichtung der Lockerungsschare (15) gegenüber der Arbeitsrichtung (18) erhalten bleibt.

15. Gerät nach Anspruch 14, *dadurch gekennzeichnet*, daß ein druckmittelbetriebener Arbeitszylinder (24) den Tragarm (16) querend einerseits mit Abstand von der Schwenkachse (19) zwischen Tragarm (16) und Gerätekopf (20) am Gerätekopf und andererseits mit Abstand von der Schwenkachse (17) zwischen Tragarm (16) und Tragrahmen (11) am Tragrahmen angreift.

16. Gerät nach einem der vorhergehenden Ansprüche, *dadurch gekennzeichnet*, daß jedes Lockerungsschar (15) über einen Haltearm (13) mit dem Tragrahmen (11) verbunden und gegenüber dem Haltearm (13) höhenverstellbar und/oder längsverstellbar und/oder hinsichtlich des Anstellwinkels verstellbar ist.

17. Gerät nach den Ansprüchen 10 und 14, *dadurch gekennzeichnet*, daß der gemeinsame Antrieb (63) der Rotoren (53) eine Einrichtung zum Wechsel der Drehrichtung enthält, die jeweils beim Wechsel der Arbeitsstellung des Tragrahmens (11) selbsttätig betätigbar ist.

18. Gerät nach Anspruch 4 mit mehreren Lockerungsscharen (15) und diesen zugeordneten Leitorganen (171), *dadurch gekennzeichnet*, daß die Leitorgane (171) zur gemeinsamen Umstellung gekoppelt sind.

19. Gerät nach Anspruch 3, *dadurch gekennzeichnet*, daß jedes Lockerungsschar (15) um eine etwa horizontale Achse (42) gegenuber dem Tragrahmen (11) verschwenkbar und über ein zur Erzeugung einer periodischen Schwingbewegung um diese Achse geeignetes Getriebe (67, 68) mit einem Antrieb (63) des zugeordneten Rotors (53) verbunden ist.

20. Gerät nach einem der Ansprüche 14 bis 17, *dadurch gekennzeichnet*, daß im Verbindungsbereich zwischen Tragarm (16) und Tragrahmen (11) und im Verbindungsbereich zwischen Tragarm (16) und Gerätekopf (20) jeweils einstellbare Vorrichtungen (27, 28) zur Begrenzung des Schwenkwinkels zwischen Tragarm (16) und Tragrahmen (11) um die sie gelenkig verbindende Schwenkachse (17) bzw. des Schwenkwinkels zwischen Tragarm (16) und Gerätekopf (20) um die sie gelenkig verbindende Schwenkachse (19) bei der Umstellung von der einen in die andere Arbeitsstellung angeordnet sind.

21. Gerät nach einem der vorhergehenden Ansprüche, *dadurch gekennzeichnet*, daß die Steigung des Lockerungsschars (15) entgegen der Arbeitsrichtung zunimmt.

22. Gerät nach einem der Ansprüche 4 bis 6 oder 20, *dadurch gekennzeichnet*, daß in einem Abstand hinter dem Tragrahmen (11) ein etwa parallel zum Tragrahmen (11) ausgerichteter Abstreifer (35), wie etwa ein Rechen, ein Abstreifblech, eine Planierschiene, angeordnet und vorzugsweise mittels beidseitiger Arme (36, 37) um eine zur Längsrichtung des Tragrahmens (11) etwa parallele Achse schwenkbar am Tragrahmen (11) gehalten ist.

Fig.1

Fig.2

0 286 096

Fig. 3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 079 595 (COLLINS)<br>* Seite 1, linke Spalte, Zeilen 1-33; Figuren 3,5,6 *<br>--- | 1,2,3 | A 01 B 13/08<br>A 01 B 13/12<br>A 01 B 49/02<br>A 01 B 15/14<br>A 01 B 35/18 |
| A | US-A-2 031 188 (STOREY)<br>* Seite 1; Figuren 1,6,7 *<br>--- | 1-7,9,<br>11,12,<br>13,16,<br>18 | |
| A | DE-A-3 232 086 (WEICHEL)<br>* Ansprüche 1-4; Figuren 1,2 *<br>--- | 1,3,5,6<br>,10,22 | |
| A | US-A-2 755 718 (ARNDT)<br>* Spalte 2, Zeile 60 - Spalte 3, Zeile 38; Figuren 1,6 *<br>--- | 5,7,8 | |
| A | EP-A-0 200 489 (RANSOMES)<br>* Zusammenfassung; Figuren 1,4,6 *<br>--- | 14,15 | |
| A | FR-A-2 202 632 (BALLU)<br>* Ansprüche 1,2; Figuren 1-3 *<br>--- | 19 | RECHERCHIERTE SACHGEBIETE (Int. Cl.4) |
| A | US-A-2 887 168 (OWEN)<br>--- | | A 01 B |
| A | US-A-3 157 139 (SPINDLER)<br>--- | | |
| A | FR-A-2 320 040 (VAN DER LELY N.V.)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 13-07-1988 | VON ARX V.U. |